# DEMANDE DE BREVET EUROPEEN

(11) **EP 4 191 458 A1**
(43) Date de publication de la demande: **07.06.2023**
(21) Numéro de dépôt: 22209136.5
(22) Date de dépôt: 23.11.2022
(51) Int. Cl.: G06F 21/73, H01L 23/00, H04L 9/08, H04L 9/32

(54) **PROCÉDÉ DE RÉALISATION D'UNE ZONE D'INDIVIDUALISATION D'UN CIRCUIT INTÉGRÉ**

(30) Priorité: 30.11.2021 FR 2112768
(71) Demandeur: Commissariat à l'énergie atomique et aux énergies alternatives, 75015 Paris (FR)
(72) Inventeur: LANDIS, Stefan, 38054 GRENOBLE Cedex 09 (FR); MEHREZ, Zouhir, 38054 GRENOBLE Cedex 09 (FR)
(74) Mandataire: Hautier IP

(57) **Abrégé**

L'invention porte sur un procédé de réalisation d'une zone d'individualisation d'une puce comprenant un premier (10A) et un deuxième (20A) niveaux de pistes électriques (10, 20), et un niveau (30A) d'interconnexions comportant des vias (30), le procédé comprenant les étapes suivantes :
- fournir le premier niveau (10A) et une couche diélectrique (200) à base d'un matériau diélectrique comprenant une concentration d'azote non nulle,
- former sur la couche diélectrique (200) un masque (300),
- graver la couche diélectrique (200) au travers des ouvertures de masque (301) par une gravure HF vapeur, de façon à former :
∘ des ouvertures (320, 320R) débouchant sur le premier niveau (10A) des pistes électriques (10),
∘ des résidus (R) azotés aléatoirement répartis au niveau de certaines ouvertures (320R), les ouvertures (320, 320R) comprenant alors des ouvertures (320R) avec résidus azotés et des ouvertures (320) sans résidus

- remplir les ouvertures (320, 320R) de sorte à former les vias (30) du niveau (30A) d'interconnexions, lesdits vias (30) comprenant des vias fonctionnels (30OK) au niveau des ouvertures sans résidus (320) et des vias inactifs (30KO) au niveau des ouvertures avec résidus (320R).

## Description

### DOMAINE TECHNIQUE

La présente invention concerne l'individualisation des circuits intégrés. Elle trouve pour application particulièrement avantageuse la protection de circuits intégrés, de composants ou de dispositifs intégrant de tels circuits.

### ETAT DE LA TECHNIQUE

L'individualisation d'un circuit intégré dans un composant permet l'identification unique de ce composant. Cela permet par exemple de protéger le composant contres des attaques par émulation des fonctions que le composant est sensé faire.

Afin d'identifier de manière unique un circuit intégré, il existe des solutions visant à utiliser les dispersions fonctionnelles inhérentes aux circuits intégrés. Les résistances des lignes d'interconnexion métallique ou des vias différent d'un circuit à l'autre, ce qui induit des chutes de tension le long du chemin emprunté par le signal électrique. Le temps de réponse des signaux diffère donc du fait de la variabilité induite sur les temps de propagation des signaux aux limites des contraintes électroniques du circuit, ou encore du fait de l'instabilité au démarrage des composants comme par exemple les mémoires SRAMS (acronyme de Static Random Access Memory signifiant mémoire vive statique) qui présentent un état unique à chaque démarrage.

Toutefois, ces solutions sont très sensibles aux variations environnementales ou au vieillissement. En particulier, des changements de températures, de tensions d'alimentation ou des interférences électromagnétiques peuvent affecter les performances de ces solutions en diminuant leur robustesse. Ainsi, les temps de réponse d'un circuit intégré peuvent évoluer dans le temps. Il en résulte qu'un circuit légitime peut éventuellement être déclaré comme étant contrefait.

Il existe donc un besoin consistant à limiter, voire à résoudre, les problématiques des solutions connues.

### RESUME

Pour atteindre cet objectif, selon un mode de réalisation on prévoit un procédé de réalisation d'une zone d'individualisation d'une puce microélectronique, ladite puce comprenant au moins :
- un premier et un deuxième niveaux de pistes électriques,
- un niveau d'interconnexions situées entre les premiers et deuxième niveaux de pistes électriques et comportant des vias destinés à connecter électriquement des pistes électriques du premier niveau avec des pistes électriques du deuxième niveau,
- la puce présentant au moins une autre zone, distincte de la zone d'individualisation, destinée à former une zone fonctionnelle de la puce.

Le procédé comprend au moins les étapes suivantes effectuées au niveau de la zone d'individualisation de la puce :
- fournir au moins le premier niveau de pistes électriques,
- former au moins une couche diélectrique sur le premier niveau, ladite couche diélectrique comprenant une concentration d'azote non nulle,
- former sur l'au moins une couche diélectrique un masque de gravure présentant des ouvertures de masque situées au moins en partie au droit des pistes électriques et rendant accessible l'au moins une couche diélectrique,
- graver l'au moins une couche diélectrique au travers des ouvertures de masque par au moins une gravure à base d'acide fluorhydrique (HF) en phase vapeur, de façon à former :
   ∘ des ouvertures débouchant sur le premier niveau des pistes électriques,
   ∘ des résidus azotés aléatoirement répartis au niveau de certaines ouvertures, les ouvertures comprenant alors des ouvertures avec résidus azotés et des ouvertures sans résidus,
- remplir les ouvertures avec un matériau électriquement conducteur de sorte à former au moins les vias du niveau d'interconnexions, lesdits vias comprenant des vias fonctionnels au niveau des ouvertures sans résidus et des vias inactifs au niveau des ouvertures avec résidus azotés

Le procédé comprend en outre, préalablement à la formation des résidus azotés dans la zone d'individualisation, une formation d'un masque de protection sur la zone destinée à former la zone fonctionnelle de la puce.

Ainsi, les résidus azotés empêchent que le matériau électriquement conducteur soit correctement déposé dans certaines ouvertures, notamment en affectant la conformité du dépôt. Ces résidus azotés conduisent alors à la formation de défauts dans certains vias.

Le procédé proposé permet donc de dégrader volontairement mais aléatoirement le niveau d'interconnexions. Cette dégradation volontaire permet de créer des vias inactifs répartis de façon aléatoire au sein de la zone d'individualisation de la puce. Le diagramme de réponse de la puce ou du circuit intégré sera donc intimement lié à ce caractère aléatoire. Cette réponse sera par conséquent unique. Chaque circuit intégré réalisé par ce procédé génère ainsi une réponse différente. Par ailleurs, le diagramme de réponse du circuit intégré sera stable dans le temps contrairement aux solutions décrites ci-dessus dans la section relative à l'état de la technique.

La zone d'individualisation est difficilement, voire n'est pas clonable physiquement. Elle peut être qualifiée par l'acronyme PUF (du vocable anglais Physically Unclonable Function). Il est donc possible de rendre unique le circuit intégré comportant cette zone d'individualisation.

Le procédé selon l'invention propose ainsi une solution fiable, que l'on peut aisément mettre en œuvre et à un cout réduit, afin de réaliser une zone d'individualisation d'un circuit intégré. Cela permet ainsi d'individualiser des circuits sans avoir recours à des technologies de lithographie spécifiques pour modifier d'une puce à une autre les motifs de la zone d'individualisation.

Les résidus azotés sont formés lors de la gravure HF vapeur, parce que la couche diélectrique comprend une concentration d'azote non nulle. De tels résidus azotés ne peuvent pas être formés si ladite couche diélectrique ne comprend pas d'azote. Typiquement, une couche diélectrique à base de SiO2 formée par dépôt chimique en phase vapeur (CVD) utilisant un gaz azoté, présente une concentration d'azote non nulle. Une couche diélectrique à base de SiO2 formée par oxydation thermique du silicium ne comprend pas d'azote et ne peut pas être directement mise en œuvre dans ce procédé. D'autres étapes visant à introduire de l'azote dans une telle couche, par exemple par implantation ou par recuit thermique sous flux d'azote, devraient alors être effectuées préalablement à la gravure HF vapeur.

Un autre aspect concerne un procédé de réalisation d'un dispositif microélectronique comportant au moins un circuit intégré, le circuit intégré comportant au moins:
- un premier et un deuxième niveaux des pistes électriques,
- un niveau d'interconnexions situées entre les premiers et deuxième niveaux des pistes électriques et comportant des via destinées à connecter électriquement des pistes du premier niveau avec des pistes du deuxième niveau
- une zone d'individualisation du circuit intégré.

La zone d'individualisation est réalisée en mettant en œuvre le procédé décrit précédemment, de préférence sur une partie seulement du circuit intégré.

Par dispositif microélectronique, on entend tout type de dispositif réalisé avec des moyens de la microélectronique. Ces dispositifs englobent notamment en plus des dispositifs à finalité purement électronique, des dispositifs micromécaniques ou électromécaniques (MEMS, NEMS...) ainsi que des dispositifs optiques ou optoélectroniques (MOEMS...). Il peut s'agir d'un dispositif destiné à assurer une fonction électronique, optique, mécanique etc. Il peut aussi s'agir d'un produit intermédiaire uniquement destiné à la réalisation d'un autre dispositif microélectronique.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
Les figures nA (n=1...13) illustrent schématiquement en coupe transverse des étapes d'un mode de réalisation d'une zone d'individualisation d'un circuit intégré selon la présente invention.
Les figures nB (n=1...13) illustrent schématiquement en vue de dessus les étapes illustrées aux figures nA correspondantes.

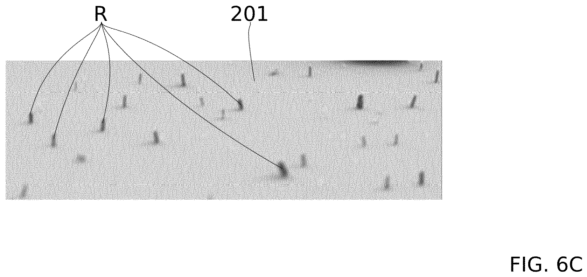

La figure 6C est une image de microscopie électronique à balayage illustrant la formation de résidus azotés, selon un mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, sur les schémas de principe, les épaisseurs des différentes couches, vias, motifs et reliefs ne sont pas représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, la formation de l'au moins une couche diélectrique à base d'un matériau diélectrique comprenant une concentration d'azote non nulle est effectuée par dépôt chimique en phase vapeur à partir d'un précurseur gazeux comprenant du silicium et une source de composés azotés.
Selon un exemple, le précurseur gazeux est pris parmi le silane (SiH4), le tétraéthoxysilane (TEOS), le tétramethoxysilane (TMOS).
Selon un exemple, la source de composés azotés est un gaz N2O ou N2, par exemple un gaz vecteur.
Selon un exemple, l'au moins une couche diélectrique est à base de SiOxNy ou de SixNy ou de SiOxCyNz avec x, y, z des nombres rationnels positifs non nuls.
Selon un exemple, le procédé comprend en outre, après formation de l'au moins une couche diélectrique, un recuit thermique effectué sous flux d'azote (N2). Cela permet d'augmenter la concentration d'azote dans l'au moins une couche diélectrique.
Selon un exemple, la concentration atomique d'azote du matériau diélectrique de l'au moins une couche diélectrique est supérieure à 1%at.
Selon un exemple, le masque de gravure est formé à base d'un matériau A, de sorte que la gravure présente une sélectivité de gravure Sdiélec:A entre le matériau diélectrique et le matériau A supérieure ou égale à 10:1.
Selon un exemple, le matériau A est choisi parmi le TiN, le SiN, le Si.
Selon un exemple, la formation de l'au moins une couche diélectrique est configurée de sorte à ce que la concentration d'azote soit inhomogène au sein de l'au moins une couche diélectrique. Cela permet d'obtenir une distribution aléatoire de résidus azotés selon un profil particulier, rendant plus difficile encore la reproduction d'une telle zone d'individualisation.
Selon un exemple, la puce est inclinée vis-à-vis de la source de composés azotés lors de la formation de l'au moins une couche diélectrique.

La réalisation des vias inactifs aléatoires est effectuée uniquement dans l'au moins une zone d'individualisation. Le circuit intégré présente au moins une autre zone, distincte de la zone d'individualisation, de préférence destinée à former une zone fonctionnelle pour le circuit intégré. Cette autre zone présente typiquement une surface plus grande que la surface de la zone d'individualisation. En particulier, la zone fonctionnelle peut présenter une surface au moins deux fois supérieure à celle de la zone d'individualisation. Le premier et le deuxième niveaux de pistes électriques ainsi que le niveau d'interconnexion s'étendent dans ladite au moins une autre zone. La zone fonctionnelle est destinée à assurer des fonctions logiques pour le fonctionnement attendu du circuit intégré. Les pistes électriques et les vias de cette zone fonctionnelle sont typiquement sans défaut. Outre les pistes électriques, cette zone fonctionnelle peut comprendre des structures micro-électronique, tel que par exemple des transistors, des diodes, des MEMS etc. La zone fonctionnelle est réalisée de façon standard, avec les procédés bien connus de l'homme du métier. Dans la suite, seule la zone d'individualisation et son procédé de fabrication sont illustrés et détaillés.

Dans le cadre de la présente invention, une zone d'individualisation dite PUF est parfaitement différenciée d'une telle zone fonctionnelle, par exemple destinée à effectuer des opérations logiques. La zone d'individualisation a quant à elle principalement et de préférence uniquement comme fonction de permettre l'identification unique de la puce et donc l'authentification de la puce. À cet effet, et comme cela sera détaillé par la suite, lors du procédé de fabrication, on prévoit de dégrader aléatoirement le niveau d'interconnexions et/ou le deuxième niveau de pistes électriques de façon à obtenir des vias inactifs. Plus précisément, on prévoit de créer de manière aléatoire des défauts au niveau de certains vias et/ou de certaines pistes du deuxième niveau, de façon à rendre inactifs ces vias ou ces pistes.

Un diagramme de réponse du circuit intégré est obtenu en appliquant une routine de test électrique ou logique aux entrées (pistes du premier niveau par exemple) de la zone d'individualisation, puis en mesurant l'état électrique ou logique en sortie (pistes du deuxième niveau pour ce même exemple) de la zone d'individualisation. Le principe est que l'on dispose pour chaque circuit intégré d'une zone d'individualisation comprenant un réseau unique de vias fonctionnels et de vias inactifs. La réponse de chaque circuit intégré sera donc différente. Chaque circuit intégré pourra donc être identifié de manière unique. La zone d'individualisation peut être qualifiée de zone PUF et la zone fonctionnelle peut être qualifiée de zone non-PUF.

Selon l'invention, le diagramme de réponse du circuit intégré dépend du nombre et de la position des vias inactifs dans la zone d'individualisation.

La zone d'individualisation est accessible distinctement de la zone fonctionnelle. La zone d'individualisation est localisée sur une zone bien délimitée de la puce. La zone d'individualisation est par exemple de forme polygonale, par exemple rectangulaire. Ainsi, n'importe quelle zone défectueuse ne peut pas être assimilable à une zone d'individualisation PUF. De même, n'importe quelle zone non défectueuse ne peut pas être assimilable à une zone fonctionnelle.

Un niveau d'interconnexions comprend des portions conductrices généralement qualifiées de vias, qui sont destinées à connecter des pistes d'un premier niveau avec des pistes d'un deuxième niveau. Les différents niveaux de pistes électriques et d'interconnexion sont en outre généralement isolés des autres éléments du circuit intégré par au moins une couche diélectrique. On notera que des vias peuvent connecter des pistes de deux niveaux qui ne sont pas directement successifs mais qui sont eux même séparés par un ou plusieurs autres niveaux.

Le procédé est typiquement mis en œuvre dans les étapes de fabrication de « fin de ligne », dites BEOL (acronyme de Back End Of Line), correspondant à la réalisation des niveaux d'interconnections électriques.

Dans la présente demande, les termes « puce » et « circuit intégré » sont employés en synonymes.

Il est précisé que, dans le cadre de la présente invention, le terme via regroupe toutes les connexions électriques tels que les plots, lignes et structures conductrices qui s'étendent, de préférence perpendiculairement, entre deux couches, successives ou non, du circuit intégré, soit entre deux niveaux de pistes électriques. Chaque niveau des pistes électriques s'étend principalement selon un plan et peut comporter des structures micromécaniques fonctionnelles telles que des transistors par exemple. De préférence les vias forment chacun un plot, de section sensiblement circulaire.

Il est précisé que, dans le cadre de la présente invention, les termes « sur », « surmonte », « recouvre », « sous-jacent », en « vis-à-vis » et leurs équivalents ne signifient pas forcément « au contact de ». Ainsi par exemple, le dépôt, le report, le collage, l'assemblage ou l'application d'une première couche sur une deuxième couche, ne signifie pas obligatoirement que les deux couches sont directement au contact l'une de l'autre, mais signifie que la première couche recouvre au moins partiellement la deuxième couche en étant soit directement à son contact, soit en étant séparée d'elle par au moins une autre couche ou au moins un autre élément.

Une couche peut par ailleurs être composée de plusieurs sous-couches d'un même matériau ou de matériaux différents.

On entend par un substrat, un film, une couche, « à base » d'un matériau A, un substrat, un film, une couche comprenant ce matériau A uniquement ou ce matériau A et éventuellement d'autres matériaux, par exemple des éléments dopants.

Plusieurs modes de réalisation de l'invention mettant en œuvre des étapes successives du procédé de fabrication sont décrits ci-après. Sauf mention explicite, l'adjectif « successif » n'implique pas nécessairement, même si cela est généralement préféré, que les étapes se suivent immédiatement, des étapes intermédiaires pouvant les séparer.

Par ailleurs, le terme « étape » s'entend de la réalisation d'une partie du procédé, et peut désigner un ensemble de sous-étapes.

Par ailleurs, le terme « étape » ne signifie pas obligatoirement que les actions menées durant une étape soient simultanées ou immédiatement successives. Certaines actions d'une première étape peuvent notamment être suivies d'actions liées à une étape différente, et d'autres actions de la première étape peuvent être reprises ensuite. Ainsi, le terme étape ne s'entend pas forcément d'actions unitaires et inséparables dans le temps et dans l'enchaînement des phases du procédé.

Le mot « diélectrique » qualifie un matériau dont la conductivité électrique est suffisamment faible dans l'application donnée pour servir d'isolant. Dans la présente invention, un matériau diélectrique présente de préférence une constante diélectrique inférieure à 7.

On entend par « gravure sélective vis-à-vis de » ou « gravure présentant une sélectivité vis-à-vis de » une gravure configurée pour enlever un matériau A ou une couche A vis-à-vis d'un matériau B ou d'une couche B, et présentant une vitesse de gravure du matériau A supérieure à la vitesse de gravure du matériau B. La sélectivité est le rapport entre la vitesse de gravure du matériau A sur la vitesse de gravure du matériau B.

Dans le cadre de la présente invention, on qualifie de résine un matériau organique ou organo-minéral pouvant être mis en forme par une exposition à un faisceau d'électrons, de photons ou de rayons X ou mécaniquement.

On peut citer à titre d'exemple des résines classiquement employées en microélectronique, des résines à base de polystyrène (PS), de méthacrylate (par exemple le Polymethyl methacrylate PMMA), d'Hydrosilsesquioxane (HSQ), de polyhydroxystyrène (PHS) etc. L'intérêt d'utiliser une résine est qu'il est facile d'en déposer une épaisseur importante, de plusieurs centaines de nanomètres à plusieurs microns.

Un repère de préférence orthonormé, comprenant les axes x, y, z est représenté sur les figures annexées. Lorsqu'un seul repère est représenté sur une même planche de figures, ce repère s'applique à toutes les figures de cette planche.

Dans la présente demande de brevet, on parlera préférentiellement d'épaisseur pour une couche et de profondeur pour une gravure. L'épaisseur est prise selon une direction normale au plan d'extension principal de la couche, et la profondeur est prise perpendiculairement au plan basal xy du substrat. Ainsi, une couche présente typiquement une épaisseur selon z, et une gravure présente une profondeur selon z également. Les termes relatifs « sur », « surmonte », « sous », « sous-jacent » se réfèrent à des positions prises selon la direction z.

Un élément situé « à l'aplomb » ou « au droit d'» un autre élément signifie que ces deux éléments sont situés tous deux sur une même ligne perpendiculaire à un plan dans lequel s'étend principalement une face inférieure ou supérieure d'un substrat, c'est-à-dire sur une même ligne orientée verticalement sur les figures.

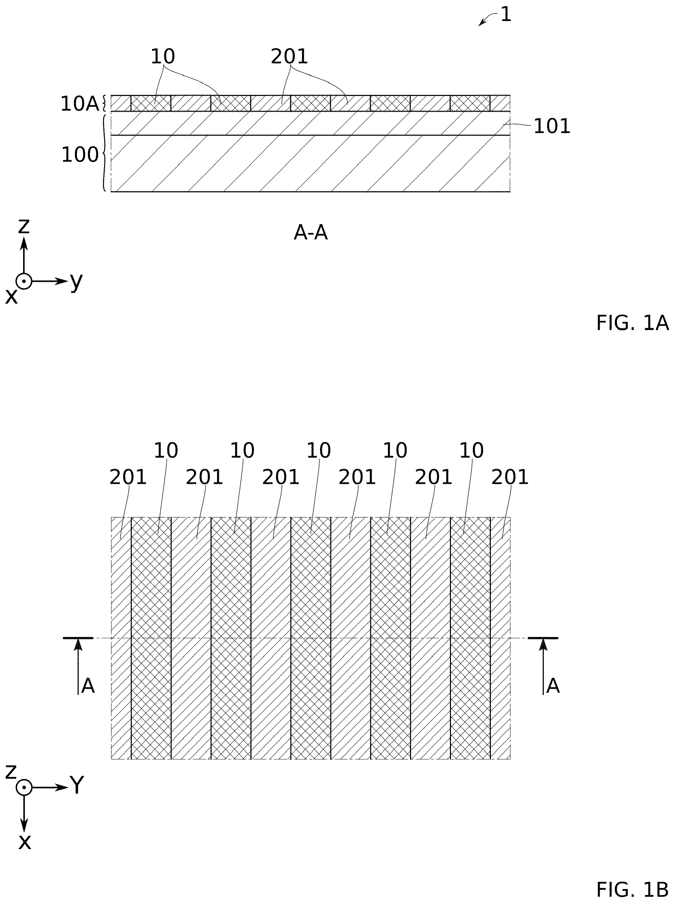

Les figures 1A et 1B illustrent de manière schématique la formation d'un premier niveau 10A de pistes électriques 10 sur un substrat 100, dans la zone d'individualisation 1. Le substrat 100 peut typiquement être à base de silicium et comporter des composants élémentaires, par exemple des transistors, sur un niveau 101 de « début de ligne », dit FEOL (acronyme de « Front End Of Line »).

Le niveau 10A s'étend principalement selon un plan xy. Le premier niveau de pistes 10A comprend des pistes électriquAes 10. Ces pistes électriques 10 sont formées dans un matériau conducteur tel que le cuivre ; ces pistes électriques 10 sont typiquement séparées et/ou encapsulées par une couche diélectrique 201. Cette couche diélectrique a également pour fonction de former une barrière contre la diffusion du cuivre. Cette couche diélectrique 201 est par exemple formée de SiO2.

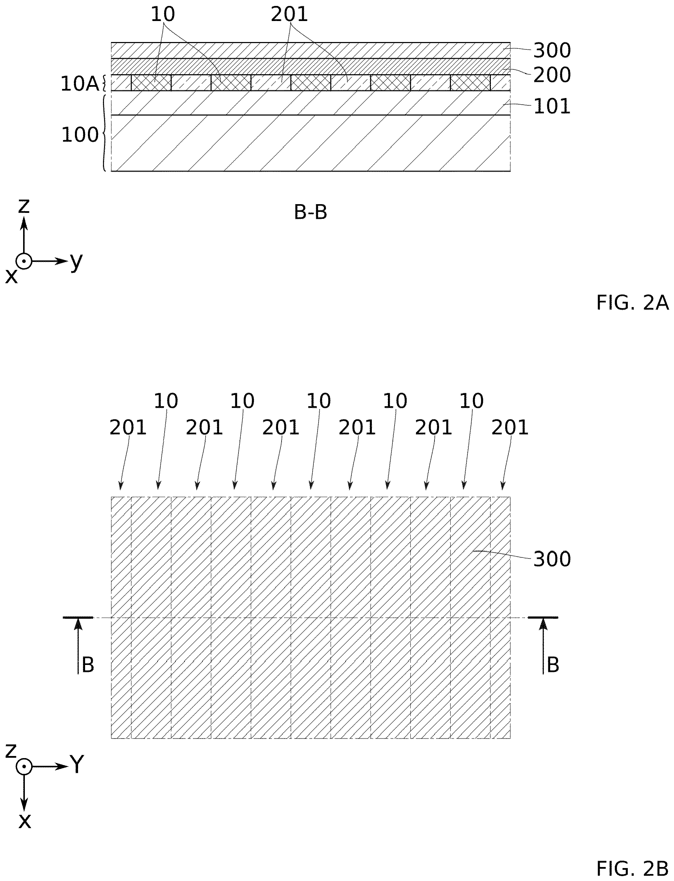

Les figures 2A et 2B illustrent la formation d'une couche diélectrique 200 et d'un masque de gravure 300 en empilement selon z sur le premier niveau de pistes 10A, en prévision de la formation du niveau d'interconnexion 30A.

La couche diélectrique 200 est de préférence directement au contact du premier niveau 10A. Elle est à base d'un matériau diélectrique comprenant de l'azote. Elle peut être à base de SiOxNy ou de SixNy ou de SiOxCyNz avec x, y, z des nombres rationnels positifs non nuls.

Cette couche diélectrique 200 peut être déposée par dépôt chimique en phase vapeur (CVD), par exemple par dépôt chimique en phase vapeur assisté par plasma (PECVD, acronyme de « Plasma Enhanced Chemical Vapor Déposition ») ou par dépôt chimique en phase à basse pression (LPCVD, acronyme de « Low Pressure Chemical Vapor Déposition »). Un précurseur gazeux de type silane (SiH4), ou tétraéthoxysilane (TEOS), ou tétramethoxysilane (TMOS) est de préférence utilisé. Le dépôt se fait de préférence en présence d'un gaz azoté du type N2O ou N2. La concentration de composés azotés dans le mélange gazeux utilisé (précurseur/gaz azoté) peut être compris entre 10% et 90%. Cela permet d'obtenir des concentrations d'azote dans la couche diélectrique 200 de l'ordre de quelques %at à quelques dizaines de %at, par exemple entre 1%at et 50%at. Cela permet d'ajuster la concentration de résidus azotés obtenus ultérieurement à partir de ladite couche diélectrique 200.

Une couche diélectrique 200 à base de SiO2 formée à partir d'un précurseur TEOS ou TMOS sous N2O présente typiquement une concentration d'azote inférieure à une couche diélectrique 200 à base de SiO2 formée à partir d'un précurseur silane sous N2O. La concentration d'azote dans une couche diélectrique 200 de type « TEOS » atteint généralement quelques %at, par exemple 1 à 4 %at. La concentration d'azote dans une couche diélectrique 200 de type « silane » peut atteindre plusieurs dizaines de %at, par exemple de 10 à 50%at. Les résidus azotés formés à partir d'une couche diélectrique 200 « TEOS » seront donc moins nombreux et/ou moins denses que les résidus azotés formés à partir d'une couche diélectrique 200 « silane ». On pourra par exemple avantageusement choisir une couche diélectrique 200 « TEOS » pour des niveaux back end présentant une faible densité de pistes électriques, par exemple inférieure à 10-2 µm-2. On pourra par exemple choisir une couche diélectrique 200 « silane » pour des niveaux back end présentant une densité de pistes électriques plus élevée, par exemple supérieure ou égale à 10-2 µm-2.

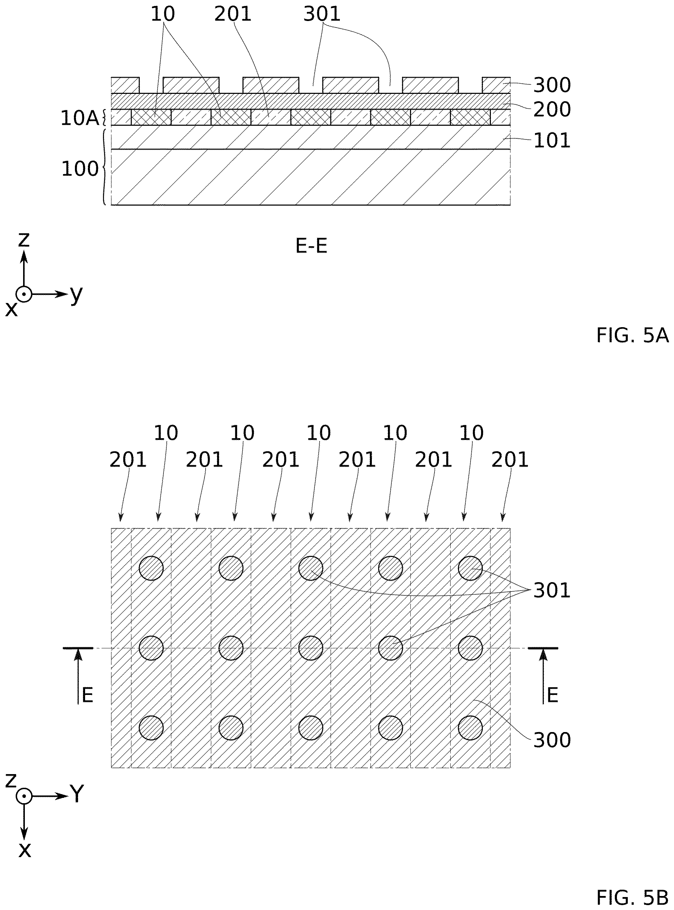

Le lecteur pourra notamment se référer au document « Effects of process parameters on the properties of silicon oxide films using plasma enhanced chemical vapor déposition with tetramethoxysilane, T.H. Chung, M.S. Kang, C.J. Chung, Y. Kim, Current Applied Physics 9 (2009) 598-604 », figure 5B, pour estimer la concentration atomique d'azote (quelques %at) présente dans une couche diélectrique 200 à base de SiO2 formée à partir de TMOS et de N2O, en fonction du rapport des pressions partielles de TMOS et de N2O dans le réacteur CVD.

Le lecteur pourra notamment se référer au document « Comparative study between silicon-rich oxide films obtained by LPCVD and PECVD, A. Moralesa, J. Barretoa , C. Domi'ngueza, M. Rieraa , M. Acevesb , J. Carrilloc, Physica E 38 (2007) 54-58 », table 1, pour estimer la concentration atomique d'azote présente dans une couche diélectrique 200 à base de SiO2 formée par PECVD à partir de silane et de N2O. Celle-ci peut atteindre une dizaine de %at.

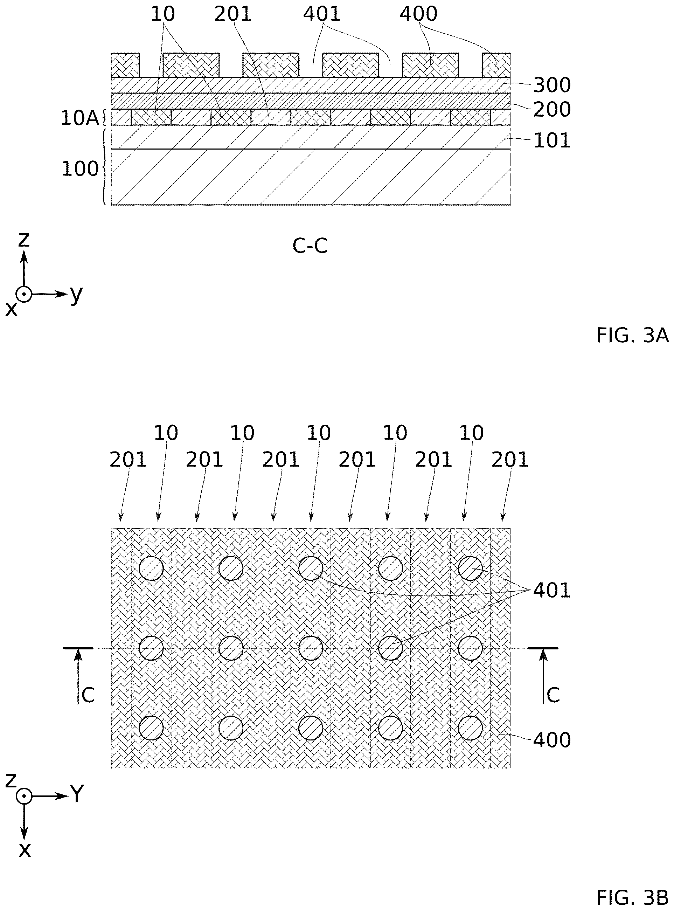

Le lecteur pourra notamment se référer au document « Study of nitrogen-rich silicon oxynitride films obtained by PECVD, D. Criadol. PereyraM.I. Alayo, Materials Characterization 50 (2003) 167-171 », figure 3, pour estimer la concentration atomique d'azote présente dans une couche diélectrique 200 à base de SiO2 formée par PECVD à partir de silane et d'un mélange N2;N2O. Celle-ci peut atteindre plusieurs dizaines de %at.

Selon une possibilité, la couche diélectrique 200 est à base de nitrure de silicium, par exemple SiN ou Si3N4.

La couche diélectrique 200 peut présenter une épaisseur typiquement comprise entre 50 nm et 500 nm, par exemple de l'ordre de 100 nm.

De façon optionnelle, après formation de la couche diélectrique 200, un ou plusieurs recuits thermiques sous flux d'azote sont effectués. Cela permet d'augmenter encore la concentration d'azote dans la couche diélectrique 200.

Par ailleurs, il est possible d'ajuster les conditions de dépôt de sorte à rendre le dépôt non homogène sur une même plaque comprenant différentes puces microélectroniques ou entre différentes plaques comprenant différentes puces microélectroniques. Cette inhomogénéité peut être obtenue en contrôlant l'inclinaison de la plaque dans la chambre de dépôt vis-à-vis des buses d'injection des gaz, ou par exemple en modifiant la distance respective des buses d'injection par rapport à la plaque. Une variation de concentration d'azote de quelques % à 20% peut ainsi être obtenue entre différentes zones d'une même plaque lors du dépôt de la couche diélectrique 200. Une variable supplémentaire peut ainsi être introduite dans la distribution aléatoire des résidus azotés entre différentes puces. Cela permet de renforcer le caractère aléatoire et non clonable des zones d'individualisation formées par le procédé.

Le masque de gravure 300 est formé sur la couche diélectrique 200. Il est choisi de préférence en un matériau A présentant une sélectivité de gravure importante vis-à-vis de du matériau diélectrique, pour une gravure HF vapeur. La sélectivité de gravure S diélec:A entre le matériau diélectrique et le matériau A est de préférence supérieure ou égale à 10:1. Pour une couche diélectrique 200 à base de SiO2, le masque de gravure 300 peut être à base de SiN ou de TiN. Pour une couche diélectrique 200 à base de SiN, le masque de gravure 300 peut être à base de Si.

Comme illustré aux figures 3A, 3B, un masque 400 à base de résine comprenant des ouvertures 401 formant des motifs de vias est déposé sur le masque de gravure 300. Ces ouvertures 401 du masque 400 servent notamment à ouvrir le masque de gravure 300. Les ouvertures 401 sont situées au moins en partie au droit des pistes électriques 10. Les ouvertures 401 présentent une dimension latérale, typiquement un diamètre, comprise entre 70 nm et 1000 nm.

En fonction de la technique mise en œuvre pour ouvrir le masque 300, le masque 400 peut être formé d'une ou plusieurs couches. Il peut être à base de résine photosensible, par exemple à tonalité positive. Un revêtement antireflets sous-jacent de type BARC (Bottom Anti Reflective Coating signifiant revêtement anti-reflexion de fond) est de préférence intercalé entre le masque 300 et le masque 400. Le masque 400 en résine photosensible peut présenter une épaisseur comprise entre 50 nm et 300 nm. Cette épaisseur peut être ajustée par exemple suivant le niveau de pistes considéré dans l'empilement et par conséquent la résolution des vias. Le revêtement antireflets peut présenter une épaisseur comprise entre 25 nm et 35 nm, par exemple de l'ordre de 30 nm.

Alternativement, le masque 400 peut comprendre deux couches de type SOC (spin on carbon) et SiARC (silicon anti reflective coating signifiant revêtement anti réflexion à base de silicium), ainsi qu'une couche de résine photosensible (masque dit « Tri Layer »). Les épaisseurs de ces trois couches varient selon la nature des couches et selon les dimensions des vias visées. Elles sont typiquement de l'ordre de 150 nm pour le SOC, 30 nm pour le SiARC et environ 100 nm pour la résine.

Les différentes couches de ce masque 400 peuvent être déposées par une méthode classique de spin coating (à la tournette).

Les ouvertures 401 du masque 400 sont réalisées en mettant en œuvre des techniques classiques de lithographie, telles que la lithographie optique, la lithographie électronique par faisceau d'électrons (ebeam), la lithographie par nanoimpression ou toute autre technique de lithographie connue de l'homme du métier.

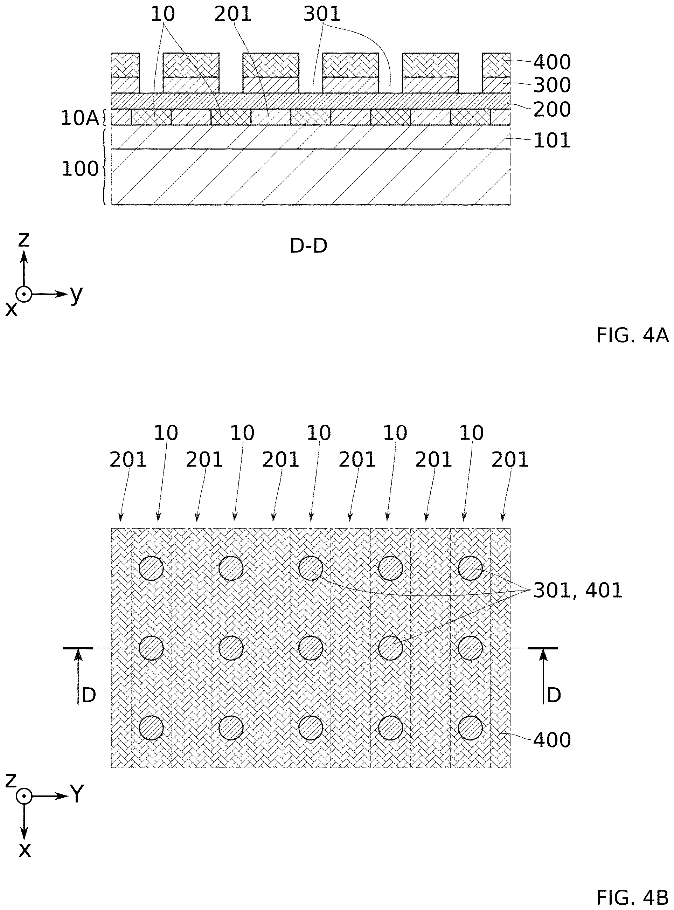

Comme illustré aux figures 4A, 4B, une gravure est effectuée dans le masque de gravure 300 pour y transférer les motifs 401 du masque 400. Cette gravure est configurée pour former les ouvertures de masque 301.

Le revêtement antireflets et le masque de gravure 300 peuvent être gravés par plasma, à l'aide d'une chimie de gravure à base de chlore, par exemple CI2 /BCI3. Ce type de plasma permet d'utiliser un masque 400 à base de résine présentant une fine épaisseur, par exemple inférieure à 200 nm.

Comme illustré aux figures 5A, 5B, le masque 400 est de préférence retiré après ouverture du masque de gravure 300. Ce retrait peut se faire classiquement par une étape dite de « stripping », par exemple par plasma à base d'oxygène.

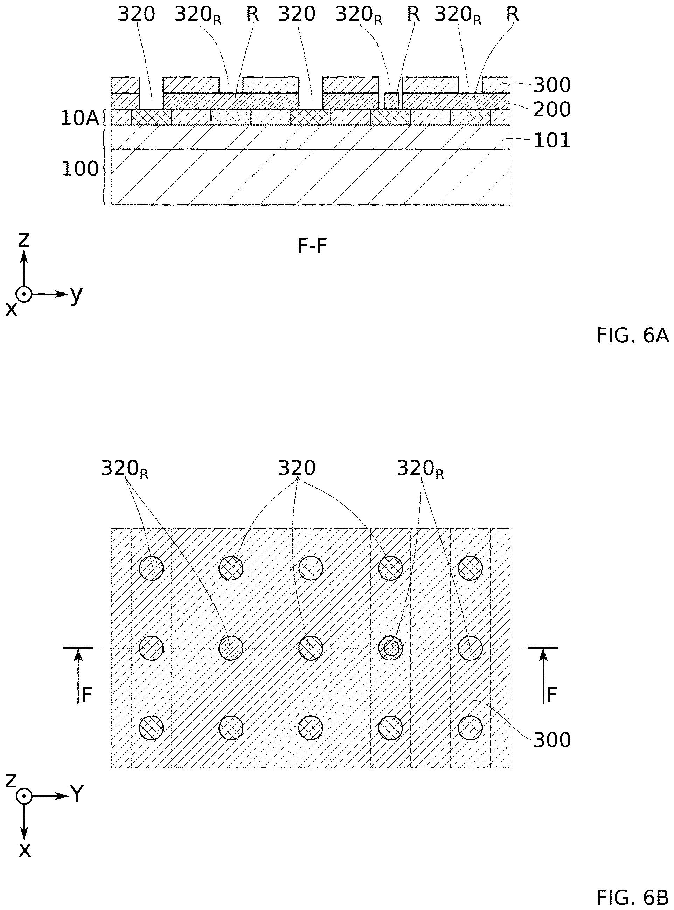

Comme illustré aux figures 6A, 6B, la couche diélectrique 200 est ensuite gravée au travers des ouvertures 301 du masque de gravure 300. Cette gravure est typiquement effectuée par HF vapeur. Le matériau diélectrique de la couche diélectrique 200 est ainsi gravé en laissant des résidus R dans certaines ouvertures 320R de la couche diélectrique 200. Ces résidus R sont des résidus azotés provenant de l'azote contenu dans la couche diélectrique 200, et formés lors de la gravure HF vapeur. Les résidus R sont typiquement à base de fluoro-silicates d'ammonium.

Pour une couche diélectrique 200 à base d'oxyde de silicium, la réaction chimique lors de la gravure HF est potentiellement la suivante :

SiO2(s) + 4HF(g) + 2NH4F(s) → (NH4)2SiF6(s) + SiF4(g) + 2H2O(g).

Pour une couche diélectrique 200 à base de nitrure de silicium, la réaction chimique lors de la gravure HF est potentiellement la suivante :

Si3N4(s) + 16HF(g) → 2(NH4)2SiF6(s) + SiF4(g).

Après gravure, on obtient ainsi des ouvertures 320 sans résidus et des ouvertures 320R avec résidus R. Les ouvertures 320R avec résidus R peuvent être totalement ou partiellement bouchées par les résidus R. La distribution des résidus R est totalement aléatoire.

La figure 6C illustre une image acquise par microscopie électronique à balayage (MEB) d'une couche d'oxyde de silicium de type « silane » gravée par HF vapeur selon un exemple de mise en œuvre du procédé. Les résidus se présentent sous forme de piliers résiduels. Le diamètre des piliers résiduels est ici compris entre 300 nm et 1,2 µm.

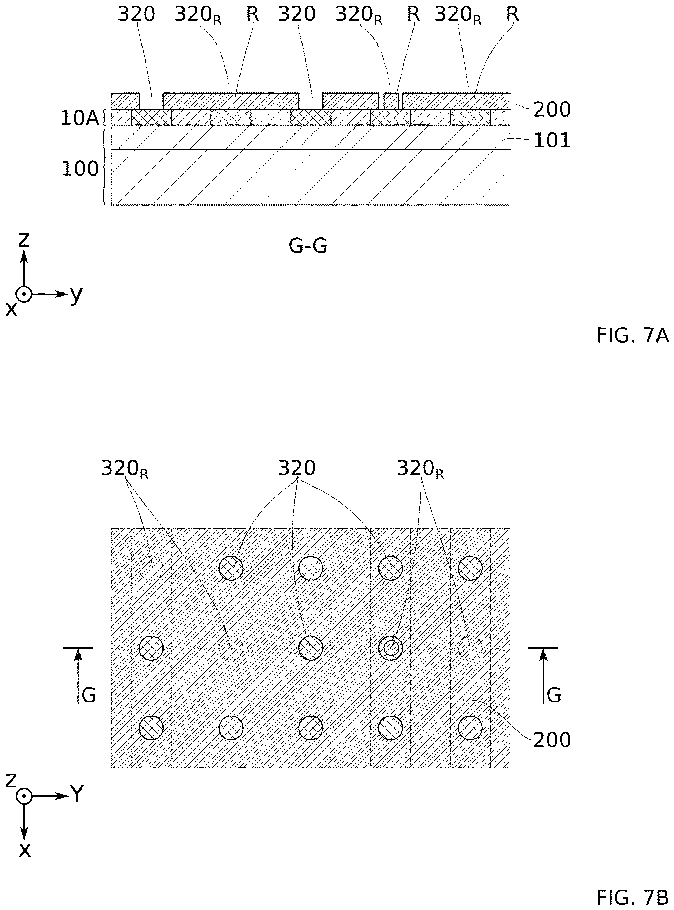

Comme illustré aux figures 7A, 7B, de façon optionnelle, après gravure de la couche diélectrique 200 au niveau des ouvertures de masque 301, le masque de gravure 300 peut être avantageusement retiré sélectivement par rapport à la couche diélectrique 200 et aux résidus R.

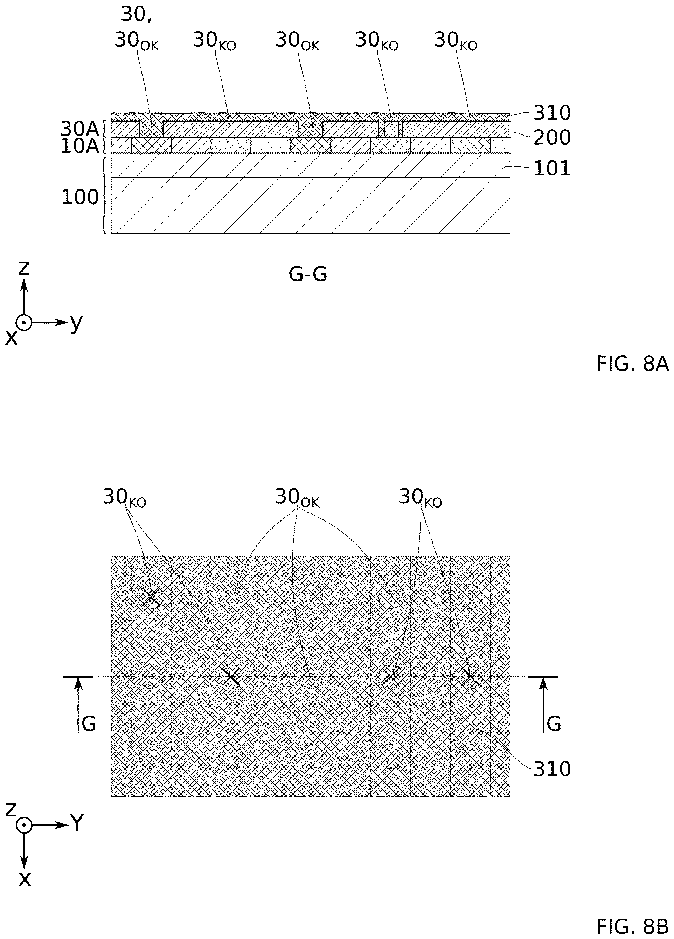

Comme illustré aux figures 8A, 8B, les ouvertures 320, 320R sont ensuite remplies par un matériau conducteur 310, de façon à former respectivement des vias fonctionnels 30OK et des vias inactifs 30KO. Les vias fonctionnels 30OK et les vias inactifs 30KO forment le niveau d'interconnexions 30A. Le matériau conducteur est de préférence du cuivre. Les procédés de dépôt de cuivre, par exemple un remplissage électrolytique ECD (acronyme de « Electro Chemical Déposition »), sont bien connus de l'homme du métier.

Les vias fonctionnels 30OK présentent typiquement une conductivité nominale lors d'un test électrique dédié. Les vias inactifs 30KO présentent typiquement une conductivité inférieure à la conductivité nominale, voire une conductivité nulle, lors de ce test électrique. Un certain nombre de vias 30KO, aléatoirement répartis, ne seront donc pas connectés ou seront mal connectés aux lignes 10.

Selon une possibilité, les vias 30KO mal connectés peuvent être ultérieurement désactivés, par exemple si la stabilité de leur connexion électrique n'est pas assez performante. Ils peuvent être utilisés en l'état, en tirant parti de leur résistance de connexion plus élevée (la surface de contact métallique étant plus faible que pour un via fonctionnel 30OK). Cette résistance de connexion plus élevée induit notamment un temps de réponse différent de la circuiterie, par exemple lors du test électrique de la zone d'individualisation.

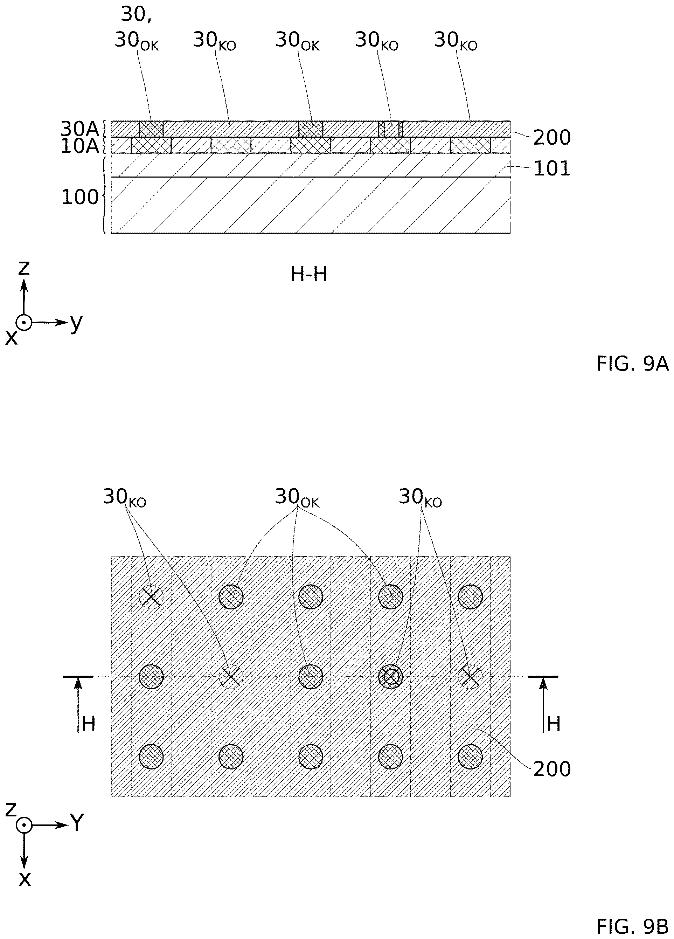

Comme illustré aux figures 9A, 9B, le cuivre déposé en excès peut être retiré, par exemple par polissage mécano-chimique (CMP). Une surface plane en face supérieure du niveau d'interconnexions 30A est ainsi obtenue.

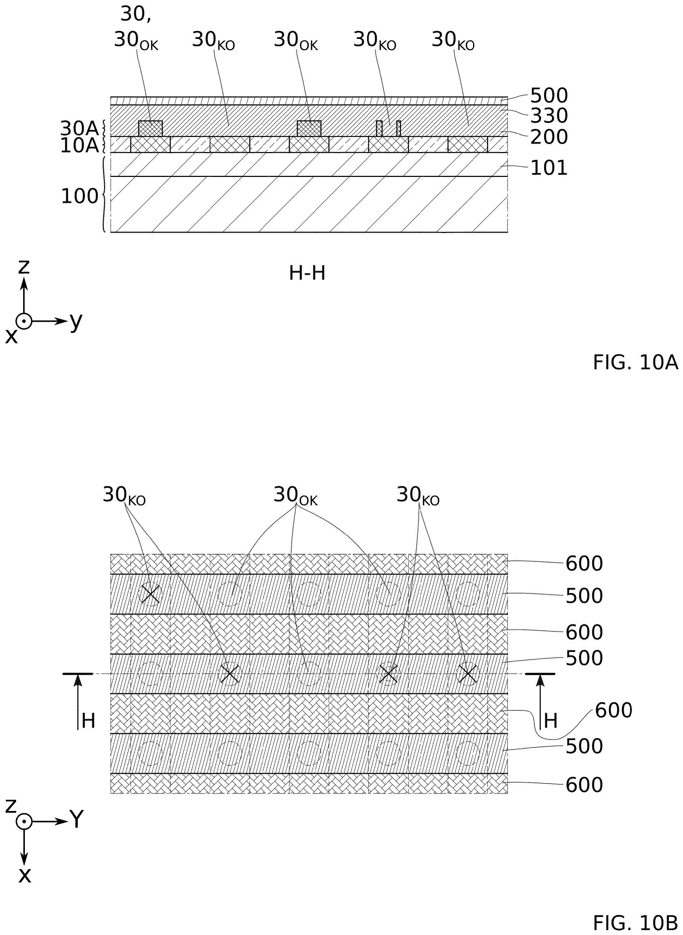

Comme illustré aux figures 10A, 10B, un nouvel empilement d'une couche diélectrique 330 et d'un masque de gravure 500 est formé sur la face supérieure du niveau d'interconnexions 30A, en prévision de la formation du deuxième niveau de pistes 20A. Un masque résine 600 est formé par lithographie sur cet empilement de façon à définir les pistes du deuxième niveau.

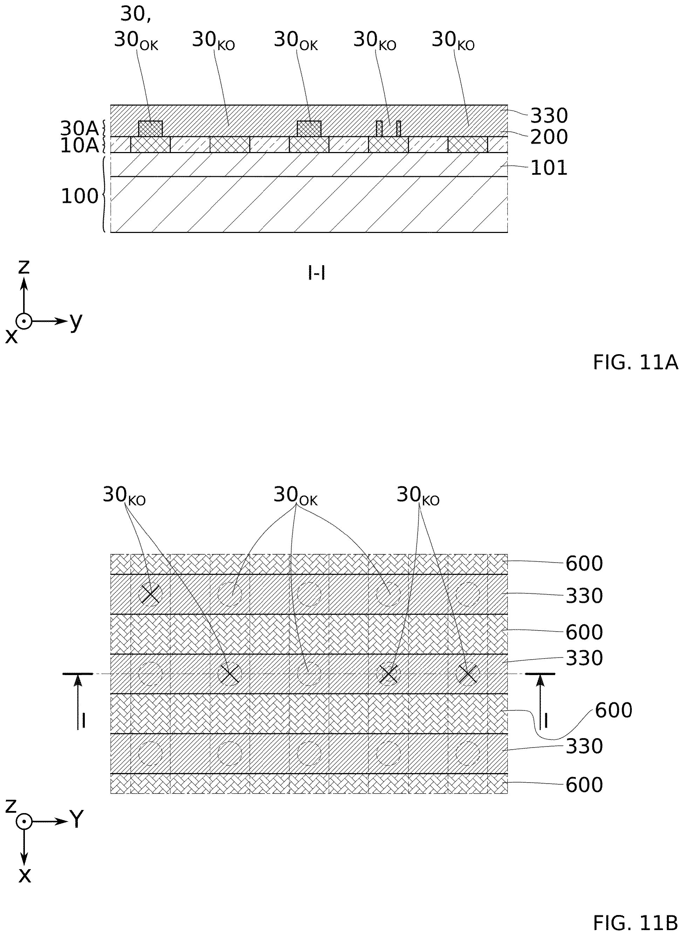

Comme illustré aux figures 11A, 11B, le masque de gravure 500 est gravé au travers du masque résine 600. Les motifs de pistes du masque 600 sont ainsi transférés dans le masque de gravure 500. Le masque résine 600 peut ensuite être retiré, par exemple par stripping.

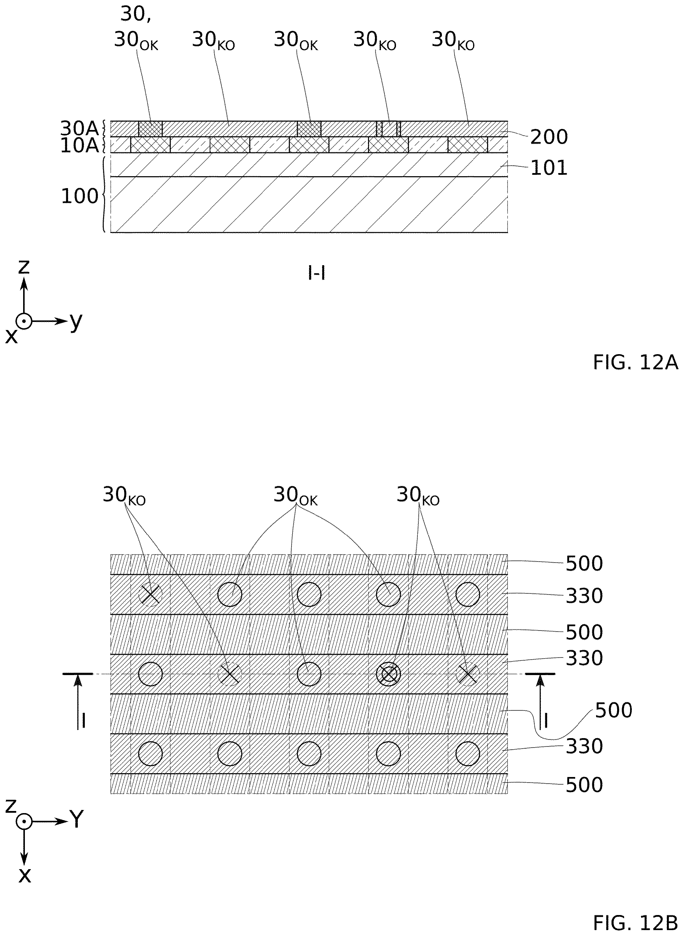

Comme illustré aux figures 12A, 12B, la couche diélectrique 330 est gravée au travers du masque de gravure 500. Cette gravure peut être ici effectuée de façon plus standard, typiquement par gravure sèche. Les motifs de pistes sont ainsi transférés dans la couche diélectrique 330.

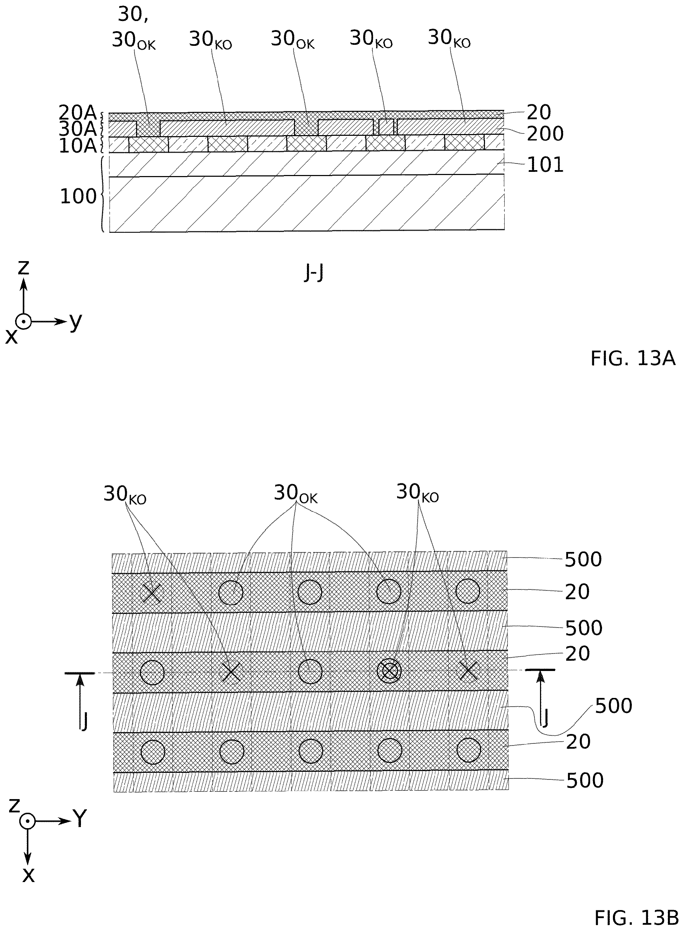

Comme illustré aux figures 13A, 13B, un dépôt de cuivre est effectué comme précédemment, de façon à remplir les motifs de pistes. Les pistes 20 du deuxième niveau de piste 20A sont ainsi formées. Une planarisation par CMP est ensuite effectuée, de façon à obtenir une surface plane en face supérieure du deuxième niveau de piste 20A.

D'autres niveaux de pistes et d'interconnexions peuvent être réalisés au-dessus des niveaux 10A, 30A, 20A.

Un réseau de vias 30 aléatoirement connectés est ainsi obtenu, avec des vias totalement connectés 30OK et des vias 30KO qui ne sont pas connectés ou qui sont partiellement connectés. La position des différents vias 30OK, 30KO et leur nombre varie d'une zone PUF à une autre zone PUF, d'une puce microélectronique à une autre puce microélectronique.

Au vu de la description qui précède, il apparaît clairement que le procédé proposé offre une solution particulièrement efficace pour réaliser une zone d'individualisation de type PUF.

L'invention n'est pas limitée aux modes de réalisations précédemment décrits et s'étend à tous les modes de réalisation couverts par les revendications.

Le mode de réalisation décrit ci-dessus s'intègre dans la fabrication de composés semi-conducteur au niveau du back end dit « cuivre ». L'invention s'étend néanmoins à des modes de réalisation utilisant un autre matériau conducteur que le cuivre. Pour cela, l'homme du métier saura sans difficulté effectuer les adaptations nécessaires en termes de choix de matériaux et d'étapes de procéder.

## Revendications

1. Procédé de réalisation d'une zone d'individualisation (1) d'une puce microélectronique, ladite puce comprenant au moins :
• un premier (10A) et un deuxième (20A) niveaux de pistes électriques (10, 20),
• un niveau (30A) d'interconnexions situées entre les premiers (10A) et deuxième (20A) niveaux de pistes électriques (10, 20) et comportant des vias (30) destinés à connecter électriquement des pistes électriques (10) du premier niveau (10A) avec des pistes électriques (20) du deuxième niveau (20A),
• la puce présentant au moins une autre zone, distincte de la zone d'individualisation, destinée à former une zone fonctionnelle de la puce, le procédé comprenant au moins les étapes suivantes effectuées au niveau de la zone d'individualisation (1) de la puce :
• fournir au moins le premier niveau (10A) de pistes électriques (10),
• former au moins une couche diélectrique (200) sur le premier niveau (10A), ladite couche diélectrique étant à base d'un matériau diélectrique comprenant une concentration d'azote non nulle,
• former sur l'au moins une couche diélectrique (200) un masque de gravure (300) présentant des ouvertures de masque (301) situées au moins en partie au droit des pistes électriques (10) et rendant accessible l'au moins une couche diélectrique (200),
• graver l'au moins une couche diélectrique (200) au travers des ouvertures de masque (301) par au moins une gravure à base d'acide fluorhydrique en phase vapeur, de façon à former :
∘ des ouvertures (320, 320R) débouchant sur le premier niveau (10A) des pistes électriques (10),
∘ des résidus (R) azotés aléatoirement répartis au niveau de certaines ouvertures (320R), les ouvertures (320, 320R) comprenant alors des ouvertures (320R) avec résidus azotés et des ouvertures (320) sans résidus,
• remplir les ouvertures (320, 320R) avec un matériau électriquement conducteur de sorte à former au moins les vias (30) du niveau (30A) d'interconnexions, lesdits vias (30) comprenant des vias fonctionnels (30OK) au niveau des ouvertures sans résidus (320) et des vias inactifs (30KO) au niveau des ouvertures avec résidus azotés (320R),
ledit procédé comprenant en outre, préalablement à la formation des résidus (R) azotés dans la zone d'individualisation (1), une formation d'un masque de protection sur la zone destinée à former la zone fonctionnelle de la puce.

2. Procédé selon la revendication précédente dans lequel la formation de l'au moins une couche diélectrique à base d'un matériau diélectrique comprenant une concentration d'azote non nulle est effectuée par dépôt chimique en phase vapeur à partir d'un précurseur gazeux comprenant du silicium et une source de composés azotés.

3. Procédé selon la revendication précédente dans lequel le précurseur gazeux est pris parmi le silane (SiH4), le tétraéthoxysilane (TEOS), le tétramethoxysilane (TMOS), et dans lequel la source de composés azotés est un gaz N2O ou N2.

4. Procédé selon l'une quelconque des revendications précédentes dans lequel l'au moins une couche diélectrique (200) est à base de SiOxNy ou de SixNy ou de SiOxCyNz avec x, y, z des nombres rationnels positifs non nuls.

5. Procédé selon l'une quelconque des revendications précédentes comprenant en outre, après formation de l'au moins une couche diélectrique (200), un recuit thermique effectué sous flux d'azote (N2).

6. Procédé selon l'une quelconque des revendications précédentes dans lequel la concentration atomique d'azote du matériau diélectrique de l'au moins une couche diélectrique est supérieure à 1%at.

7. Procédé selon l'une quelconque des revendications précédentes dans lequel le masque de gravure (300) est formé à base d'un matériau A, de sorte que la gravure présente une sélectivité de gravure S diélec:A entre le matériau diélectrique et le matériau A supérieure ou égale à 10:1.

8. Procédé selon la revendication précédente dans lequel le matériau A est choisi parmi le TiN, le SiN, le Si.

9. Procédé selon l'une quelconque des revendications précédentes dans lequel la formation de l'au moins une couche diélectrique (200) est configurée de sorte à ce que la concentration d'azote soit inhomogène au sein de l'au moins une couche diélectrique (200).

10. Procédé selon la revendication précédente en combinaison avec la revendication 2 dans lequel la puce est inclinée vis-à-vis de la source de composés azotés lors de la formation de l'au moins une couche diélectrique (200).

11. Procédé de réalisation d'un dispositif microélectronique comportant au moins un circuit intégré, le circuit intégré comportant au moins :
• un premier (10A) et un deuxième (20A) niveaux de pistes électriques (10, 20),
• un niveau (30A) d'interconnexions situé entre les premiers (10A) et deuxième (20A) niveaux de pistes électriques et comportant des vias (30) destinés à connecter électriquement des pistes (10) du premier niveau (10A) avec des pistes (20) du deuxième niveau (20A),
• une zone d'individualisation (1),
le procédé de réalisation du dispositif microélectronique comprenant la réalisation de la zone d'individualisation (1) en mettant en œuvre le procédé selon l'une quelconque des revendications précédentes sur une partie seulement du circuit intégré.
